# EUROPÄISCHE PATENTANMELDUNG

(11) **EP 1 023 974 A2**
(43) Veröffentlichungstag der Anmeldung: **02.08.2000**
(21) Anmeldenummer: 99125966.4
(22) Anmeldetag: 27.12.1999
(51) Int. Cl.: B26D 7/26, B26D 3/08, D01G 11/00, D06H 7/00, B65H 35/02, B65H 23/04

(54) **Vorrichtung zum Aufschneiden von voluminösen, vernähten Materialien, insbesondere von Steppdecken**

(30) Priorität: 28.12.1998 DE 19860431
(71) Anmelder: Badenia Bettcomfort GmbH, 77948 Friesenheim (DE)
(72) Erfinder: Köhler, Eberhard, 09127 Chemnitz (DE); Nestler, Michael, 09127 Chemnitz (DE); Nendel, Wolfgang, 09569 Schönerstadt (DE); Vettermann, Gert, 09217 Burgstädt (DE); Mölders, Hans-Peter, 77654 Offenburg (DE); Engelhardt, Manfred, 77948 Friesenheim (DE); Kohler, André, 77948 Friesenheim (DE)

(57) **Zusammenfassung**

Bekannte Vorrichtungen zum Schneiden von Materialbahnen führen zum vollständigen Trennen der Materialbahn. Dabei wird sowohl gegen eine feste Unterlage wie auch mit einem Gegenmesser geschnitten. Andere Lösungen zerkleinern die Materialbahn in kleine Stücke, um eine Weiterverarbeitung zu ermöglichen. Diesen Vorrichtungen haftet der Nachteil an, daß nur mit sehr hohem technischen Aufwand eine Rückgewinnung und Nutzung der wertvollen Materialkomponenten möglich ist. Eine sortenreine Trennung ist fast ausgeschlossen.

Auf einer Messerwelle (3) sind über Distanzelemente (5) eine Vielzahl von Schneidmessern (4) angeordnet. Zur Rückgewinnung des Füllmaterials (24) wird über eine Stelleinrichtung (1) ein definierter Schneidspalt zur Unterlage (14) eingestellt, so daß nur die obere Decklage (23) mit den Nähten (25) geschnitten wird. Der Transport der Materialbahn (26) durch die Messerwelle (3) erfolgt über ein Einzugswalzenpaar (6) und ein Auswurfwalzenpaar (2) unterstützt durch die Vorschubkomponenete der Messerwelle (3). Die geschnittene obere Decklage (23) kann sehr leicht manuell abgenommen werden.

Hauptanwendungsgebiet der Vorrichtung sind Unternehmen der Steppdeckenfertigung wie auch der Polsterindustrie, die ein hohes Abfallaufkommen haben.

## Beschreibung

### Stand der Technik

Für die Herstellung von Steppdecken sind eine Reihe technischer Lösungen bekannt, die auch das Schneiden der benötigten Deckengrößen beinhalten. So wird in DE-OS 3513627 ein Verfahren zum kontinuierlichen Steppen vorgestellt, wobei eine Steppeinrichtung zum Längssteppvorgang und eine Steppeinrichtung zum Quersteppvorgang beschrieben werden. Beide Steppeinrichtungen laufen getrennt zueinander. Lösungsvorschläge zur Aufbereitung von fehlerhaften Decken bei z.B. Fadenbruch werden nicht angeboten.

Reine Schneideinrichtungen werden in DE-OS 3208493 bzw. DE-OS 3033151 beschrieben. Hauptinhalt dieser Einrichtungen ist das Zerschneiden der Textilmaterialrollen, wobei der konstruktive Aufbau so gewählt ist, daß die Warenbahn vollständig zerschnitten wird. Für eine Anwendung bei vernähten Steppdecken führen diese Einrichtungen zur Materialzerkleinerung, die eine weitere Handhabung für eine Trennung in die unterschiedlichen Materialfraktionen fast unmöglich machen.

Nach DE-OS 3009226 wird ein rotierendes Messer zum Schneiden des Doppelgewebes in Webmaschinen beschrieben. Auch bei dieser Einrichtung wird das zu schneidende Material vollständig zerschnitten, was für eine Weiterverwendung hinsichtlich Materialrückgewinnung sehr nachteilig ist.

In DE-OS 4344920 wird eine Vorrichtung zum transversalen Schneiden von verschiedenartigen Materialien beschrieben. Hierzu sind kreisförmige Schneiden sowie entsprechende Gegenschneiden angeordnet, die auf einem Schlitten angeordnet sind und das vollständige Durchtrennen der Materialien bewirken. Auch bei dieser Vorrichtung entstehen Streifen, die eine spätere Rückgewinnung der unterschiedlichen Materialarten erschweren. Zusammengefaßt kann zum aktuellen Stand der Technik eingeschätzt werden, daß eine Reihe technischer Lösungen zum Durchtrennen von Materialbahnen bekannt sind, die zu einer entsprechenden Zerkleinerung des Ausgangsmaterials führen, was jedoch die Handhabung für eine materialartgerechte Trennung erheblich erschwert. Im Gegensatz zur erfindungsgemäßen Lösung sind aus dem Stand der Technik keine Lösungen bekannt, die bei voluminösen und vernähten Materialien jeweils nur die obere Lage Anschneiden, um ein leichtes Öffnen der vernähten Materialien zu erreichen.

Ausgehend vom Stand der Technik besteht das Ziel der Erfindung in der Schaffung einer Vorrichtung, die vernähte Materialbahnen mit einem entsprechenden Nähmuster so behandelt, daß ohne bedeutenden Aufwand eine Rückgewinnung des zwischen den Decklagen befindlichen Füllmaterials möglich ist. Zur Umsetzung dieser Zielstellung ist eine Messerwelle mit einer Vielzahl von Messern mit einem einstellbaren Schneidspalt zur Unterlage angeordnet, wobei die Materialbahn über Transportwalzen durch die Messerwelle bewegt und dabei die jeweils oben liegende Decklage der Materialbahn geschnitten wird. Die unten liegende Decklage wird nicht geschnitten, dabei jedoch alle vorhandenen Nähte aufgetrennt und somit ein leichtes Ablösen der Materialfraktionen ermöglicht.

Der Erfindung liegt die Aufgabe zugrunde, eine Vorrichtung zu schaffen, die es ermöglicht, vernähte Materialbahnen so zu trennen, daß eine Rückgewinnung von Füllmaterialien ermöglicht wird. Die Vorrichtung ist als Einheit für insbesondere die Steppdeckenindustrie vorgesehen, um das hochwertige Füllmaterial aus Abfalldecken nutzen zu können.

### Lösung des Problems bzw. der technischen Aufgabe

Technische Aufgabe der Erfindung ist die Herstellung einer einfachen und leicht zu bedienenden Vorrichtung zum Anschneiden von vernähten und voluminösen Materialien zur Rückgewinnung von Füllmaterial aus vernähten Materialbahnen, wobei die Handhabung einfach und der technische Aufwand minimal sind. Die technische Aufgabe wird erfindungsgemäß dadurch gelöst, daß mit den Elementen der Vorrichtung nach manueller Zuführung der Materialbahn nur die jeweils obere Lage in Streifensegmente zerschnitten wird, dabei die Nahtverbindung weitestgehend aufgelöst und die anschließende Trennung und Rückgewinnung des Füllmaterials ermöglicht wird.

Zur Lösung der erfindungsgemäßen Aufgabe ist auf einem Gestell (27) eine Tischplatte (28) mit einem Einzugsschacht (7) angeordnet. Nach manueller Vorlage der Materialbahn (26) im Einzugsschacht (7) ist an dessen Ende ein Sensor (8) zum Start des Einzugswalzenpaares (6), Auswurfwalzenpaar (2) sowie der Messerwelle (3) angeordnet. Zum besseren Transport der Materialbahn (26) ist die Drehrichtung der Messerwelle (3) am Anfang des Prozesses in Transportrichtung der Materialbahn (26) ausgeführt, um den Transport auf der Unterlage (14) zu unterstützen. Das Einzugswalzenpaar (6) und das Auswurfwalzenpaar (2) sind über eine Kette (18) sowie Kettenräder (22) mit einem Motor (20) in Wirkverbindung angeordnet. Zur Verarbeitung von unterschiedlichen Dicken der Materialbahn (26) sind die oberen Walzen des Einzugswalzenpaares (6) wie auch des Auswurfwalzenpaares (2) über eine Feder (12) und ein Gleitstück (11) vertikal beweglich in einer Aussparung (13) angeordnet. Die Durchmesser des Auswurfwalzenpaares (2) sind mit einem definierten Betrag größer ausgebildet als die Durchmesser des Einzugswalzenpaares (6).

Zur Einstellung des erforderlichen Schneidspaltes zu einer Unterlage (14) ist die Messerwelle (3) über Stelleinrichtungen (1) vertikal verstellbar angeordnet. An der Messerwelle (3) sind entsprechend der vorhandenen Nahtkontur sowie des Materials der Materialbahn (26) über Distanzelemente (5) eine Vielzahl von Schneidmessern (4) auf der Messerwelle (3) angeordnet.

Die Messerwelle (3) ist dabei über das Spannelement (29) mit den Distanzelementen (5) sowie den Schneidmessern (4) einstückig ausgebildet. Zum Antrieb der Messerwelle (3) ist ein Motor (19) über eine Kupplung (21) direkt an der Messerwelle (3) befestigt. Eine weitere erfindungsgemäße Lösung ist die Anordnung eines Zugmittels für den Antrieb der Messerwelle (3). Zur Trennen der Nahte (25) zwischen der oberen Decklage (23), dem Füllmaterial (24) und der unteren Decklage (31) der Materialbahn (26) sind auf der Messerwelle (3) die Schneidmesser (4) in unterschiedlicher Anzahl und Ausführungsform über die Distanzelemente (5) sowie die Spannelemente (29) angeordnet. Zum Auftrennen der Nähte (25) der Materialbahn (26) ist eine Stoffklemme (9) über einen Kniehebel (10) schwenkbar angeordnet, wobei die obere Decklage (23) der Materialbahn (26) über die Federkraft des Kniehebels (10) fixiert ist. Zum vollständigen Schneiden der Materialbahn (26) ist nach Verlassen des Sensors (8) die Drehrichtung der Messerwelle (3) entgegen der Transportrichtung der Materialbahn (26) ausgeführt. Zur Vermeidung von Verletzungen des Bedienpersonals ist auf der Tischplatte (28) der Einzugsschacht (7) angeordnet, der in seiner Bauform Verletzungen ausschließt.

### Anwendungsgebiet

Die erfindungsgemäße Vorrichtung ist für eine wirtschaftliche und einfache Rückgewinnung von Füllmaterialien aus Abfalldecken bei der Steppdeckenfertigung vorgesehen. Der Kern der Vorrichtung besteht in der Auflösung der vorhandenen Nähte aus dem Steppmuster, wobei insbesondere eine Nahtauflösung erfolgt, ohne dabei die gesamte Materialbahn zu zerstören, indem partiell an der Oberfläche der Schneidvorgang erfolgt. Eine weitere Nutzung ist auch für Streifenmaterial geeignet, die mit Nähten durchsetzt sind, um entsprechendes Füllmaterial zurückzugewinnen. Neben der Nutzung der Vorrichtung zur Reduzierung und Wiedergewinnung von Abfallmaterialien in der Steppdeckenfertigung ist die Anwendung auch für andere bahn- und streifenförmige Materialien mit entsprechenden Füllungen nutzbar.

### Ausführungsbeispiel

Die erfindungsgemäße Vorrichtung soll nachfolgend an einem Ausführungsbeispiel näher erläutert werden.

Es zeigen:

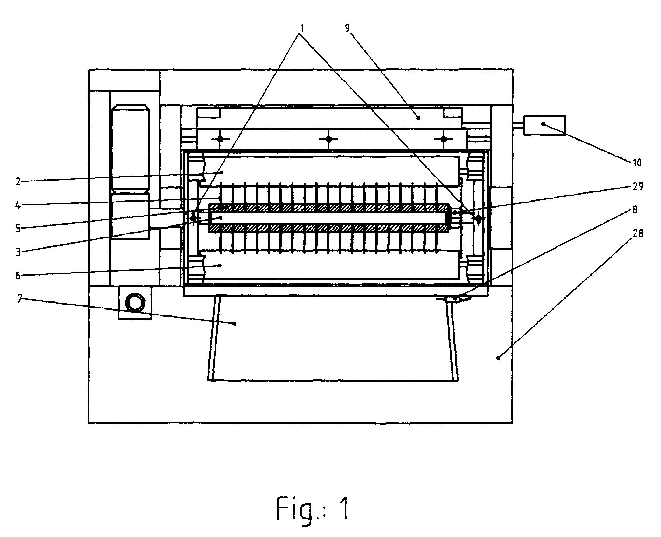

- Fig. 1: Draufsicht der erfindungsgemäßen Vorrichtung

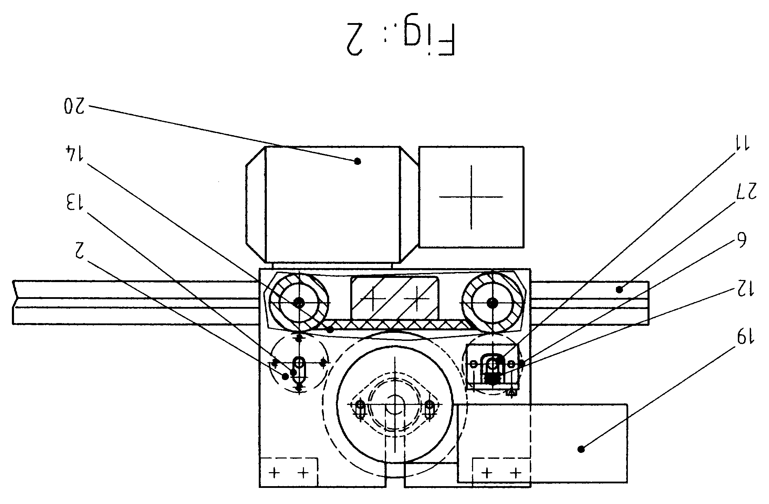

- Fig. 2: Seitenansicht

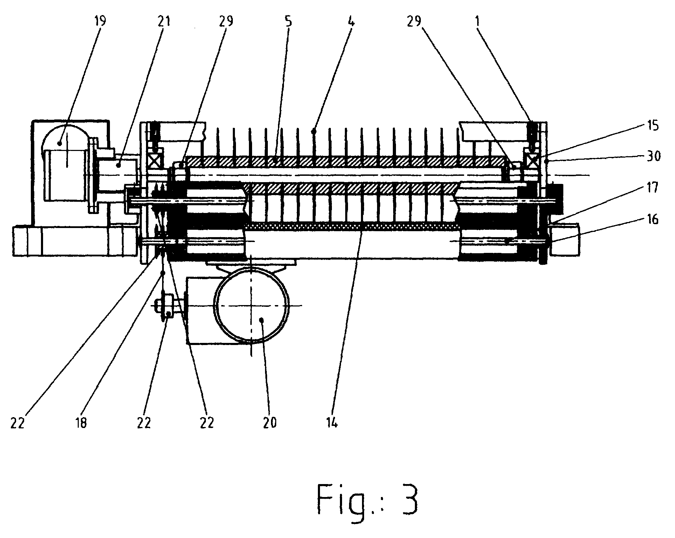

- Fig. 3: Schnittdarstellung

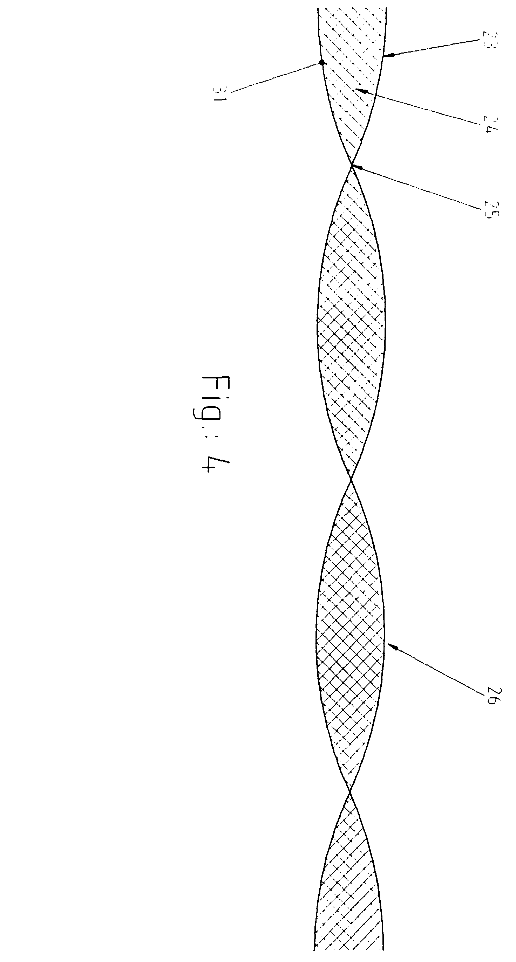

- Fig. 4: Aufbau des Materialverbundes

Entsprechend der erfindungsgemäßen Vorrichtung ist auf einem Gestell 27 eine Tischplatte 28 angeordnet. In Verbindung mit der Seitenwand 30 ist in Höhe der Tischplatte 28 ein Einzugsschacht 7 angeordnet, in welchem die aufzubereitende Materialbahn 26 eingegeben wird. Nach Erreichen des Sensors 8, der sich vorzugsweise am Ende des Einzugsschachtes 7 befindet, wird über den Motor 19 die Messerwelle 3 in Rotation versetzt und gleichzeitig über den Motor 20 das Einzugswalzenpaar 6 wie auch das Auswurfwalzenpaar 2 in Rotation versetzt. Die Drehrichtung der Messerwelle 3 ist zu Beginn des Verarbeitungsvorganges in Transportrichtung, um das Führen der Materialbahn 26 durch die Vorrichtung zu unterstützen. Wenn jedoch der Sensor 8 im Einzugsschacht 7 frei wird, erfolgt eine Drehrichtungsumkehr der Messerwelle 3, um insbesondere den letzten Abschnitt der Materialbahn 26 sicher zu verarbeiten sowie Materialstau bzw. Verstopfungen auszuschließen.

Für das Auftrennen der Naht 25 wird jeweils die obere Decklage 23 der Materialbahn 26 angeschnitten, ohne dabei die untere Decklage 31 zu schneiden. Im Ergebnis wird die Materialbahn 26 so aufbereitet, daß die untere Decklage 31 in der Stoffklemme 9 mit dem Kniehebel 10 geklemmt werden kann und manuell sehr leicht die Abnahme der oberen Decklage 23, welche durch die Naht 25 fixiert war, vorzunehmen. Hieran kann sich die Abnahme des Füllmaterials 24 anschließen. Da bei der Steppdeckenherstellung sehr unterschiedliche Mustervarianten vorkommen können, ist die Messerwelle 3 sehr flexibel aufgebaut. So befinden sich auf der Messerwelle 3 Distanzelemente 5, die den Abstand zwischen den Schneidmessern 4 sowie deren Anzahl bestimmen. Das gesamte Paket von Schneidmessern 4 und Distanzelementen 5 wird über Spannelemente 29 verspannt und fixiert. Die Messerwelle 3 wird selbst über Lager 15 in der Seitenwand 30 befestigt, wobei zur Einstellung eines optimalen Schneidspaltes gegen die Unterlage 14 die Messerwelle 3 über die Stelleinrichtung 1 auf die jeweilige Materialbahn 26 angepaßt werden kann.

Da die Materialarten sehr stark schwanken, insbesondere bei der Füllmaterialmenge, ergeben sich sehr unterschiedliche Materialdicken. Diese Dikkenunterschiede werden ausgeglichen, indem die jeweils obere Walze des Einzugswalzenpaares 6 bzw. des Auswurfwalzenpaares 2 über eine Feder 12 mit einem Greifstück 11 in der Aussparung 13 vertikal beweglich angeordnet sind. Der Antrieb der Messerwelle 3 erfolgt über einen Motor 19, welcher über die Kupplung 21 mit dieser verbunden ist.

Der Antrieb des Einzugawalzenpaares 6 sowie des Auswurfwalzenpaares 2 erfolgt über den Motor 20 sowie eine Kette 18 und Kettenräder 22. Das Einzugswalzenpaar 6 wie auch das Auswurfwalzenpaar 2 stützen sich über eine Welle 17 in der Seitenwand 30 ab, wobei die Lagerung der Welle 17 über die Lagerung 16 erfolgt.

Zum Erreichen einer leichten Zugspannung beim Transport der Materialbahn 26 durch die Messerwelle 3 ist das Auswurfwalzenpaar 2 im Durchmesser etwas größer ausgeführt als der Durchmesser des Einzugswalzenpaares 6.

Die Schneidmesser 4 sind vorzugsweise als Kreismesser ausgeführt, können aber auch als Bogenmesser oder gezahnt zur Anwendung kommen. Die gesamte Schneideinrichtung ist abgedeckt, um Verletzungen durch die Bedienperson auszuschließen und kann auch mit ähnlichen Elementen umgesetzt werden.

## Patentansprüche

1. Schneidvorrichtung zum Aufschneiden der Oberseite von voluminösen vernähten Materialien, insbesondere von Steppdecken mit Antrieben zum Transport der Materialbahn, mit Schneidmessern (4) auf einer Messerwelle (3), gleichen oder unterschiedlichen Distanzelementen (5) zwischen den Schneidmessern (4), einer Stelleinrichtung (1) mit der der vertikale Abstand der Messerwelle (3) zur Unterlage (14) einstellbar ist und einem Motor (19) für den Messerwellenantrieb, dessen Drehrichtung in bestimmten Phasen des Materialtransportes veränderbar ist.

2. Vorrichtung nach Anspruch 1, gekennzeichnet dadurch, daß zur Verarbeitung von unterschiedlichen Materialdicken die jeweils oberen Walzen des Auswurfwalzenpaares (2) und des Einzugswalzenpaares (6) über eine Feder (12) und ein Gleitstück (11) in einer Aussparung (13) vertikal verstellbar sind.

3. Vorrichtung nach Anspruch 1 bis 2, gekennzeichnet dadurch, daß der Durchmesser des Auswurfwalzenpaares (2) zur Erzeugung einer Zugspannung größer als der Durchmesser des Einzugswalzenpaares (6) ausgebildet ist.

4. Vorrichtung nach Anspruch 1 bis 3, gekennzeichnet dadurch, daß ein Sensor (8) zum Start des Einzugswalzenpaares (6), Auswurfwalzenpaares (2) sowie der Messerwelle (3) im Einzugsschacht (7) angeordnet ist und beim Verlassen des Sensors (8) die Drehrichtung der Messerwelle (3) entgegen der Transportrichtung der Materialbahn (26) umgekehrt wird.

5. Vorrichtung nach Anspruch 1 bis 4, gekennzeichnet dadurch, daß auf der Messerwelle (3) die Schneidmesser (4) als Kreismesser, Bogenmesser oder Kombination von beiden angeordnet sind.
